# EUROPEAN PATENT APPLICATION

(11) **EP 4 786 639 A1**
(43) Date of publication of application: **05.08.2026**
(21) Application number: 23954479.4
(22) Date of filing: 20.12.2023
(51) Int. Cl.: C23C 22/60, C23C 22/82, C23C 22/74, C21D 8/12, C09D 163/00, C09D 7/61, C08K 3/20, C08K 3/36, C08K 3/16

(54) **INSULATION COATING COMPOSITION FOR ELECTRICAL STEEL SHEET, ELECTRICAL STEEL SHEET, AND METHOD FOR MANUFACTURING SAME**

(30) Priority: 25.09.2023 KR 20230128404
(71) Applicant: POSCO Co., Ltd, Gyeongsangbuk-do 37859 (KR)
(72) Inventor: KIM, Hyunjong, Pohang-si, Gyeongsangbuk-do 37859 (KR); KWON, Minserk, Pohang-si, Gyeongsangbuk-do 37859 (KR)
(74) Representative: Meissner Bolte Partnerschaft mbB
(86) International application number: PCT/KR2023/021129
(87) International publication number: WO 2025/070896

(57) **Abstract**

An insulating film composition for an electrical steel sheet according to an embodiment of the present disclosure includes: 100 parts by weight of silica, 50 to 200 parts by weight of metal hydrofluoric acid, 5 to 150 parts by weight of vanadate, and 30 to 300 parts by weight of resin.

## Description

### BACKGROUND OF THE INVENTION

### (a) Field of the Invention

An embodiment of the present disclosure relates to an insulating film composition for an electrical steel sheet, an electrical steel sheet, and a manufacturing method thereof. In particular, the present disclosure relates to an electrical steel sheet insulating film composition, an electrical steel sheet, and a manufacturing method thereof for providing excellent durability and extreme corrosion resistance in a high temperature and a high humidity environment, and providing excellent heat resistance at a very high temperature such as stress removal annealing (SRA) by appropriately combining components of an insulating film composition.

### (b) Description of the Related Art

An electrical steel sheet is used as a material for transformers, motors, and electrical equipment. Unlike general carbon steel prioritizing workability such as mechanical characteristics, it is a functional product prioritizing electric characteristics. Required electric characteristics include low iron loss, and high magnetic flux density, permeability and a space factor.

The electrical steel sheet is classified into a grain-oriented electrical steel sheet and a non-oriented electrical steel sheet. The grain-oriented electrical steel sheet has excellent magnetic properties in a rolling direction by forming a Goss texture ({110}<001> texture) on an entire steel sheet by using an abnormal grain growth phenomenon called secondary recrystallization. The non-oriented electrical steel sheet is an electrical steel sheet with uniform magnetic properties in all directions on a rolled sheet.

Formation of an insulating film corresponds to a final process for manufacturing a product, and when making a core by stacking multiple pieces after punching into a predetermined shape in addition to the conventional electric characteristic of controlling generation of eddy current, it requires sticking resistance and tightness of surface by which core steel sheets are not tight to each other after an SRA process for restoring magnetic characteristics by removing continuous punching workability for controlling wearing of a mold and a processing stress of a steel sheet. In addition to the basic characteristics, excellent application workability of a coating solution and solution stability for long-term use after mixing are also required. The coating solution used for this purpose includes chromate-based chromium coating and phosphate-based phosphate coating.

The coatings have the drawback of poor corrosion resistance. It is also known that various solution properties are poor when chromium is not added. Therefore, it is aimed to develop an excellent insulation coating that is environment-friendly and is relatively corrosion-resistant.

### SUMMARY OF THE INVENTION

The present disclosure attempts to provide an insulating film composition for an electrical steel sheet, an electrical steel sheet, and a manufacturing method thereof. In detail, the present disclosure attempts to provide an insulating film composition for an electrical steel sheet for providing excellent durability and extreme corrosion resistance in a high-temperature and high-humidity environment, and providing excellent heat resistance at a very high temperature such as stress removal annealing (SRA) by appropriately combining components of an insulating film composition, and an electrical steel sheet and a manufacturing method thereof.

An embodiment of the present disclosure provides an insulating film composition for an electrical steel sheet including: 100 parts by weight of silica; 50 to 200 parts by weight of metal hydrofluoric acid; 5 to 150 parts by weight of vanadate; and 30 to 300 parts by weight of resin.

Silica may have a pH of 8 to 12.

The metal hydrofluoric acid may include at least one of fluorotitanic acid (F₆H₂Ti) and fluorozirconic acid (F₆H₂Zr).

The vanadate may include at least one of NaVO₃, KVO₃, and Mg(VO₃)₂.

The resin may include at least one of epoxy-based resin, acetate-based resin, nitrile-based resin, and vinylalcohol.

The resin may include epoxy-based resin, and the epoxy-based resin may have an epoxy value of 0.10 to 0.30 per 100 g.

Another embodiment of the present disclosure provides an electrical steel sheet including: an electrical steel sheet substrate; and an insulating film positioned on a surface of the electrical steel sheet substrate, wherein the insulating film includes VO₂.

The insulating film may include 5 to 150 parts by weight of VO₂, 50 to 200 parts by weight of TiO₂, 50 to 200 parts by weight of ZrO₂, and 10 to 50 parts by weight of SiO₂.

Another embodiment of the present disclosure provides a method for manufacturing an electrical steel sheet including: preparing an electrical steel sheet substrate; applying an insulating film composition on a surface of the electrical steel sheet substrate; and heat-treating the electrical steel sheet substrate, wherein the insulating film composition includes 100 parts by weight of silica, 50 to 200 parts by weight of metal hydrofluoric acid, 5 to 150 parts by weight of vanadate, and 30 to 300 parts by weight of resin.

The heat-treating may be performed for 10 seconds to 300 seconds at the temperature of 750 to 1,000 °C.

According to an embodiment of the present disclosure, it has excellent durability and extreme corrosion resistance in the high-temperature and high-humidity environment, and has excellent heat resistance at the temperature at which processability such as the stress removal annealing (SRA) is very high.

According to an embodiment of the present disclosure, it has an excellent insulating effect in a high-frequency magnetic field environment.

According to an embodiment of the present disclosure, the viscosity of the solution may be maintained for a long time without adding environmentally harmful components such as chromium or lead, making it suitable for application to natural coater or spray coater processes.

### BRIEF DESCRIPTION OF THE DRAWINGS

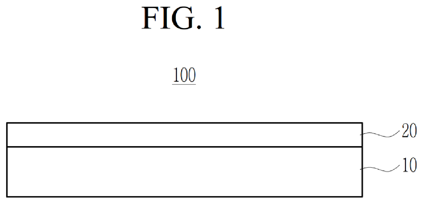

FIG. 1 shows a schematic diagram on a cross-section of an electrical steel sheet according to an embodiment of the present disclosure.

### DETAILED DESCRIPTION OF THE EMBODIMENTS

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Thus, a first element, component, region, layer, or section discussed below could be termed a second element, component, region, layer, or section without departing from the teachings of the present disclosure.

The technical terms used herein are to simply mention a particular exemplary embodiment and are not meant to limit the present disclosure. An expression used in the singular encompasses an expression of the plural, unless it has a clearly different meaning in the context. In the specification, it is to be understood that terms such as "including", "having", etc., are intended to indicate the existence of specific features, regions, numbers, stages, operations, elements, components, or combinations thereof disclosed in the specification, and are not intended to preclude the possibility that one or more other specific features, regions, numbers, operations, elements, components, or combinations thereof may exist or may be added.

When a part is referred to as being "on" another part, it may be directly on the other part or intervening parts may also be present. In contrast, when an element is referred to as being "directly on" another element, there are no intervening elements therebetween.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the meanings equal to the contextual meanings in the relevant field of art, and are not to be interpreted to have idealized or excessively formal meanings unless clearly defined in the present application.

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present disclosure.

The insulating film composition for an electrical steel sheet according to an embodiment of the present disclosure includes: 100 parts by weight of silica, 50 to 200 parts by weight of metal hydrofluoric acid, 5 to 150 parts by weight of vanadate, and 30 to 300 parts by weight of resin.

Respective components will be described in detail. In an embodiment of the present disclosure, parts by weight refers to a relative weight ratio with reference to 100 parts by weight of silica, and the solid of each component is referenced. The solid refers to the weight of each component when it is dried without any volatilizing agent such as solvent. In detail, it refers to the remaining weight after heat treatment, assuming a heat treatment process during formation of an insulating film.

Silica is a component for reducing iron loss by providing tension to the steel plate. When a very small amount of silica is included, it is difficult to obtain sufficient tension-giving effect on the steel plate. When a very big amount of silica is included, a sticky property or stability in a solution may have problems.

Silica may include basicity and acidity, and more specifically may include basicity. When basic silica is included, it is advantageous in terms of stability of the insulating film composition and storage of the solution may be improved. The basic silica may have a pH of 8 to 12. The silica may be dispersed in a sol form to measure pH.

Silica may have an average particle diameter ranging from 5 to 20 nm. When the average particle diameter of silica is too small, the condensation reaction speed is fast, causing agglomeration and color deviation defects on the surface. When the average particle diameter is too big, a surface area per unit mass is reduced, slowing down the condensation reaction speed and causing defects. In detail, silica may have an average particle diameter in the range of 10 to 15 nm. In an embodiment of the present disclosure, the particle diameter may be measured by the Zeta Potential that is a particle size meter, and the average particle diameter is the arithmetic average.

Silica may be formed of at least one nanoparticle with a different average particle diameter. In detail, the silica may be used in combination with at least one or more silica nanoparticles having different average particle diameters to form an insulating film having excellent coating characteristics.

An insulating film composition for an electrical steel sheet according to an embodiment of the present disclosure includes 50 to 200 parts by weight of metal hydrofluoric acid for 100 parts by weight of silica. In the case of conventional insulating film compositions, there are cases where oxide particles such as TiO₂, ZrO₂, or MnO₂ are included as inorganic ceramic particles. However, in this case, the solution is gelled, which causes problems in terms of stability of solution. When added to the insulating film composition in the form of metal hydrofluoric acid as in an embodiment of the present disclosure, it does not gel and is excellent in terms of stability of solution. During the process for forming the insulating film, metal hydrofluoric acid reacts during a coating formation heat treatment process and changes into an insoluble material. That is, when present in the insulating film composition in the form of metal hydrofluoric acid, the viscosity of the solution remains close to the Newtonian fluid characteristic for application to a natural coater. Specifically, the viscosity of the insulating film composition may be maintained at 10 c,p or less for 72 hours. More specifically, the viscosity may be 1 to 10 c.p. The viscosity may be measured using a Brookfield viscometer as a reference at the temperature of 30 °C.

When too little metal hydrofluoric acid is included, problems such as poor corrosion resistance and weather resistance may be generated. When too much metal hydrofluoric acid is included, it may be gelled and may cause problems in terms of solution stability. More specifically, it may include 52 to 150 parts by weight of metal hydrofluoric acid. More specifically, it may include 55 to 100 parts by weight.

The metal hydrofluoric acid may include at least one of flurorotitanic acid (F₆H₂Ti) and flurorozirconic acid (F₆H₂Zr). More specifically, it may simultaneously include flurorotitanic acid (F₆H₂Ti) and flurorozirconic acid (F₆H₂Zr). When it includes flurorotitanic acid (F₆H₂Ti) and flurorozirconic acid (F₆H₂Zr), it may include 5 to 150 parts by weight of flurorotitanic acid (F₆H₂Ti) and 5 to 150 parts by weight of flurorozirconic acid (F₆H₂Zr). More specifically, it may include 20 to 100 parts by weight of flurorotitanic acid (F₆H₂Ti) and 10 to 50 parts by weight of flurorozirconic acid (F₆H₂Zr). When the ratio of flurorozirconic acid is excessively high, cracks may be generated on the surface, causing usability problems and deterioration of corrosion resistance. When the ratio of flurorotitanic acid is excessive, gelation may be generated.

The insulating film composition for an electrical steel sheet according to an embodiment of the present disclosure includes 5 to 150 parts by weight of vanadate for 100 parts by weight of silica. The vanadate functions to improve insulation in an ultra-high frequency environment, and also has the effect of uniforming color of the surface. In an embodiment of the present disclosure, the ultra-high frequency environment refers to a bandwidth of 200 GHz or higher, and when excellent insulation is achieved at the ultra-high frequencies, and this is applied to the grain-oriented electrical steel sheet, it helps improve the electromagnetic waves shield function around transmission towers and high-voltage power lines. When a very small amount of vanadate is included, it may not properly perform the aforementioned function. When a very big amount of vanadate is added, the life-span of the solution may be reduced. In detail, 10 to 100 parts by weight of vanadate may be included. In detail, 30 to 75 parts by weight of vanadate may be included.

Vanadate may include at least one of NaVO₃, KVO₃, and Mg(VO₃)₂. In detail, it may include NaVO₃.

The insulating film composition for an electrical steel sheet according to an embodiment of the present disclosure includes 30 to 300 parts by weight of resin for 100 parts by weight of silica. Resin provides corrosion resistance. When a very small amount of resin is included, cracks may be generated on the surface. When a very big amount of resin is included, gelation of the composition may be a problem. The resin may include at least one of epoxy-based resin, acetate-based resin, nitrile-based resin, and vinylalcohol. More specifically, the resin may include epoxy-based resin. Epoxy resin has an advantage in corrosion resistance as it includes aliphatic and aromatic compounds.

The epoxy resin may have an epoxy value of 0.10 to 0.30 for each 100g. In the aforementioned range, it has an advantage in corrosion resistance. Density of epoxy resin may be 0.5 to 1.5g/cm³.

In addition to the components described above, the composition for forming an insulating film may further include a solvent. The solvent facilitates the application of the composition and uniformly disperses the components. The amount of solvent is not limited, but may include 100 parts by weight to 1000 parts by weight for 100 parts by weight of silica.

In an embodiment of the present disclosure, metal phosphate and chromate may not be included. When the metal phosphate is included in the insulating film composition, it becomes very vulnerable to weather resistance. Chromate may not be included as it has a detrimental effect on the environment. More specifically, it includes metal phosphate and chromate in an amount of 1 part by weight or less for 100 parts by weight of silica.

FIG. 1 shows a schematic diagram of a cross-section of an electrical steel sheet 100 according to an embodiment of the present disclosure. As shown in FIG. 1, the electrical steel sheet 100 includes an electrical steel sheet substrate 10 and an insulating film 20 disposed on the the electrical steel sheet substrate 10.

The electrical steel sheet substrate 10 may use general non-oriented or grain-oriented electrical steel sheets without limits. In an embodiment of the present disclosure, the main configuration is to form an insulating film 20 with a special component on the electrical steel sheet substrate 10, so a detailed description of the electrical steel sheet substrate 10 will be omitted.

In addition, the components of the grain-oriented electrical steel sheet substrate will now be described.

The grain-oriented electrical steel sheet substrate 10 may include: 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less (excluding 0%) of carbon (C), 0.005 to 0.05 wt% of N, and 0.01 to 0.15 wt% of antimony (Sb), tin (Sn), or a combination thereof, and a remainder may include Fe and other inevitable impurities. The description of respective components of the grain-oriented electrical steel sheet substrate 10 is generally known, so no detailed description will be provided.

A metal oxide layer (or a base coating layer or a primary film) formed by reaction with an annealing separator and an oxide layer of the steel sheet during a secondary recrystallization process may exist between the grain-oriented electrical steel sheet substrate and the insulating film. An example of the metal oxide layer would be a forsterite layer. In the process for manufacturing a grain-oriented electrical steel sheet, it is possible to suppress the formation of a metal oxide layer or remove the metal oxide layer so that the grain-oriented electrical steel sheet substrate touches the insulating film.

A thickness of the insulating film 20 may be 0.5 to 10 µm. When the insulating film 20 is too thin, it is difficult to secure adequate insulation. When the insulating film 20 is too thick, the space factor may be reduced. In an embodiment of the present disclosure, when forming the thin insulating film 20, adequate insulation properties may be secured. More specifically, the thickness of the insulating film 20 may be 1 to 5 µm.

The insulating film 20 includes VO₂. The vanadate is formed when the vanadate reacts within the insulating film composition during the process for forming an insulating film. The VO₂ may include 5 to 150 parts by weight. The VO₂ is proportional to a content of vanadate in the insulating film composition.

The insulating film 20 includes 50 to 200 parts by weight of TiO₂ and 50 to 200 parts by weight of ZrO₂. They are formed when Ti and Zr in metal hydrofluoric acid react.

The insulating film 20 may include a composite oxide of Ti and Zr. They are formed when metal hydrofluoric acids react. When added in the form of metal oxide like the existing insulating film composition, no reaction is generated between metal oxides and a composite metal oxide is not formed. When a composite oxide of Ti and Zr is present, it may include 100 to 300 parts by weight of the composite oxide of Ti and Zr.

The insulating film 20 may also include silica. 10 to 50 parts by weight of silica may be included in the insulating film.

The method for manufacturing an electrical steel sheet according to an embodiment of the present disclosure includes: preparing an electrical steel sheet substrate; applying an insulating film composition to a surface of the electrical steel sheet substrate; and performing a heat treatment.

The electrical steel sheet substrate and the insulating film composition have been described in detail above, so redundant descriptions will be omitted.

For example, the electrical steel sheet substrate may be manufactured as follows.

A steel slab is prepared. The steel slab is heated. The slab may be heated using a low temperature slab method at the temperature below 1,200 °C. A hot rolled plate is manufactured by hot rolling the heated steel slab. The manufactured hot rolled plate may be hot-rolled and annealed. A cold rolled plate is manufactured by cold rolling the hot rolled plate. Cold rolling may be performed once, or cold rolling including intermediate annealing may be performed at least twice. The cold rolled sheet undergoes primary recrystallization annealing. The first recrystallization annealing of the cold-rolled sheet may include: simultaneously decarburization annealing and nitride annealing the cold-rolled sheet, or may include nitride annealing the same after decarburization annealing. An annealing separator is applied on the surface of the recrystallization annealed steel plate. The applied amount of the annealing separator may be 1 to 5 g/m². If the amount of annealing separator applied is too small, the film may not be smoothly formed. If the amount of annealing separator applied is too high, secondary recrystallization may be affected. Therefore, the applied amount of annealing separator may be adjusted within the range described above. Secondary recrystallization annealing is performed on the steel plate coated with the annealing separator. During the secondary recrystallization annealing, a primary soaking temperature may be 650 to 750 °C, and a secondary soaking temperature may be 1,100 to 1,250 °C. In the temperature section of the temperature increasing section, it may be controlled in the condition of 15 °C/hr. A gas atmosphere may be performed in an atmosphere including 20 to 30 volume% of nitrogen and 70 to 80 volume% of hydrogen up to the first soaking stage, and in the secondary soaking stage, it may be maintained in a 100% hydrogen atmosphere for 15 hours and then furnace cooling may be performed.

In the heat treatment, a heat treatment temperature may be 700 to 1000 °C. If the temperature is too low, the time for forming an insulating film may be too long, which may result in poor continuous processing workability. If the temperature is too high, heat resistance and blueing resistance may be deteriorated due to cracks. In detail, the heat treatment temperature may be 750 to 950 °C. In detail, it may be 750 to 900 °C. The heat treatment time may range from 10 to 300 seconds. In detail, it may range from 30 seconds to 180 seconds.

During the heat treatment, the atmosphere may be a nitrogen atmosphere.

An embodiment of the present disclosure, a comparative example to contrast with it, and examples of their evaluation will now be described. However, the following embodiment is only a preferable embodiment of the present disclosure, and the present disclosure is not limited thereto.

### Embodiment

A grain-oriented electrical steel sheet (300*60 mm) including 3.1% of Si as a weight ratio and having a primary film annealed with the plate thickness of 0.23 mm is prepared as a test material.

The insulating film composition is manufactured by mixing the components in the ratios listed in Table 1. A solution including silica is mixed with a solution including zirconium hydrofluoric acid and NaVO₃. Epoxy powder is added to the solution. The epoxy value and density are approximately 0.20 equivalents per 100 g and 1.08 g/cm³, respectively. Titania hydrofluoric acid is added. The pH value of the treatment solution is adjusted to 2.8 using hydrofluoric acid (HF) solution. Water is added therein. After coating with a natural coater, drying is performed at 850 °C for 45 minutes.

The prepared solution is applied at 3.1 g/mm² on both sides of the electrical steel sheet and is heat treated at 850 °C for 45 seconds to form an insulating film with the thickness of 1 µm.

Weather resistance, corrosion resistance, solution stability, and adhesion are estimated using the following methods and are summarized in Table 2.

### Weather resistance estimation

Weather resistance is estimated under the conditions of 98% of moisture, 60 °C, and 72 hours, and is marked as "OK" if it is good and "NG" if it is bad.

### Corrosion resistance estimation

A salt spray test is performed at 5% of NaCl, 100 RH, 65 °C, for 8 hours. If it is good, it is marked as "OK", and if it is bad, it is marked as "NG".

### Solution stability estimation

After storing the solution at 30°C for 72 hours, the viscosity is measured using a Brook Field viscometer. If the viscosity is equal to or less than 10 cp, it is determined to be OK, and if it is greater than 10 cp, it is determined to be NG.

### Heat resistance estimation

It is heated for 2 hours under the condition of 560°C, 20% of hydrogen, and 80% of nitrogen. A cross-hatch cut test is performed. When the test result is 5B or higher, it is marked as "OK", and when it is less than 5B, it is marked as "NG".

**(Table 1)**

| Types (parts by weight) | Silica | H₂F₆Zr | H₂F₆Ti | NaVO₃ | resin |
|---|---|---|---|---|---|
| 1 | 100 | 14.3 | 42.9 | 42.9 | 100 |
| 2 | 100 | 2.9 | 42.9 | 42.9 | 100 |
| 3 | 100 | 214.3 | 42.9 | 42.9 | 100 |
| 4 | 100 | 14.3 | 2.9 | 42.9 | 100 |
| 5 | 100 | 14.3 | 214.3 | 42.9 | 100 |
| 6 | 100 | 14.3 | 42.9 | 2.9 | 100 |
| 7 | 100 | 14.3 | 42.9 | 214.3 | 100 |
| 8 | 100 | 66.7 | 200 | 200 | 466.7 |
| 9 | 100 | 1.4 | 4.3 | 4.3 | 10 |
| 10 | 100 | 14.3 | 42.9 | 42.9 | 21.4 |
| 11 | 100 | 14.3 | 42.9 | 42.9 | 1000 |

**(Table 2)**

| Types | Weather resistance | Corrosion resistance | Solution stability (C.P.) | Heat resistance |
|---|---|---|---|---|
| 1 | OK | OK | OK | OK |
| 2 | NG | NG | OK | NG |
| 3 | OK | OK | NG | OK |
| 4 | NG | NG | OK | NG |
| 5 | OK | OK | NG | OK |
| 6 | NG | NG | OK | NG |
| 7 | OK | OK | NG | OK |
| 8 | NG | NG | OK | NG |
| 9 | OK | OK | NG | OK |
| 10 | NG | NG | OK | NG |
| 11 | OK | OK | NG | OK |

As shown in Table 1 and Table 2, when the components of the insulating film composition are quantitatively included, it may be confirmed that weather resistance, corrosion resistance, solution stability, and heat resistance are simultaneously excellent. On the other hand, if the components of the insulating film composition are not properly included, it may be confirmed that some characteristics are inferior. An XRD analysis is performed on Sample 1 to obtain the values of Table 3. Through this, it is confirmed that VO₂, TiO₂, and ZrO₂ are formed in the insulating film.

**(Table 3)**

| Types | Positions (Ev) | Peak intensity |
|---|---|---|
| TiO₂ | 458 | 2700 |
| ZrO₂ | 183 | 900 |
| VO₂ | 530 | 2200 |
| SiO₂ | 70 | 6300 |
| C-O or C=O | 532 | 1500 |
| C₆H₂-C(O)- | 285 | 1200 |
| Zr-F₄ | 685 | 1100 |

The present disclosure is not limited to the embodiments but may be manufactured in many different forms, and a person of ordinary skill in the technical field to which the present disclosure belongs will understand that the present disclosure may be implemented in other specific forms without changing the technical idea or essential features of the present disclosure. Therefore, the embodiments described above should be understood as exemples in all respects and not restrictive.

### [Description of Symbols]

| | | | |
|---|---|---|---|
| 100 : | electrical steel sheet | 10 : | electrical steel sheet substrate |
| 20 : | insulating film | | |

## Claims

1. An insulating film composition for an electrical steel sheet comprising:
100 parts by weight of silica;
50 to 200 parts by weight of metal hydrofluoric acid;
5 to 150 parts by weight of vanadate; and
30 to 300 parts by weight of resin.

2. The insulating film composition of claim 1, wherein
the silica has a pH of 8 to 12.

3. The insulating film composition of claim 1, wherein
the metal hydrofluoric acid includes at least one of flurorotitanic acid (F₆H₂Ti) and flurorozirconic acid (F₆H₂Zr).

4. The insulating film composition of claim 1, wherein
the vanadate includes at least one of NaVO₃, KVO₃, and Mg(VO₃)₂.

5. The insulating film composition of claim 1, wherein
the resin includes at least one of epoxy-based resin, acetate-based resin, nitrile-based resin, and vinylalcohol.

6. The insulating film composition of claim 5, wherein
the resin includes epoxy-based resin, and
the epoxy-based resin has an epoxy value of 0.10 to 0.30 per 100 g.

7. An electrical steel sheet comprising:
an electrical steel sheet substrate; and
an insulating film disposed on a surface of the electrical steel sheet substrate,
wherein the insulating film includes VO₂.

8. The electrical steel sheet of claim 7, wherein
the insulating film includes 5 to 150 parts by weight of VO₂, 50 to 200 parts by weight of TiO₂, 50 to 200 parts by weight of ZrO₂, and 10 to 50 parts by weight of SiO₂.

9. A method for manufacturing an electrical steel sheet comprising:
preparing an electrical steel sheet substrate;
applying an insulating film composition on a surface of the electrical steel sheet substrate; and
heat-treating the electrical steel sheet substrate,
wherein the insulating film composition includes 100 parts by weight of silica, 50 to 200 parts by weight of metal hydrofluoric acid, 5 to 150 parts by weight of vanadate, and 30 to 300 parts by weight of resin.

10. The method of claim 9, wherein
the heat-treating is performed for 10 seconds to 300 seconds at the temperature of 750 to 1,000 °C.
